# NEUE EUROPÄISCHE PATENTSCHRIFT

(11) **EP 3 203 102 B2**
(45) Veröffentlichungstag und Bekanntmachung des Hinweises auf die Entscheidung über den Einspruch: **15.01.2025**
(45) Hinweis auf die Patenterteilung: 28.07.2021
(21) Anmeldenummer: 17151576.0
(22) Anmeldetag: 16.01.2017
(51) Int. Cl.: F16D 55/226, F16D 65/097

(54) **BREMSBELAG UND BREMSBELAGHALTEVORRICHTUNG EINER SCHEIBENBREMSE**
BRAKE LINING AND BRAKE LINING DEVICE OF A DISC BRAKE
GARNITURE DE FREIN ET DISPOSITIF DE RETENUE DE GARNITURE D'UN FREIN À DISQUE

(30) Priorität: 05.02.2016 DE 102016001321
(43) Veröffentlichungstag der Anmeldung: 09.08.2017
(73) Patentinhaber: MAN Truck & Bus SE, 80995 München (DE)
(72) Erfinder: Butz, Matthias, 80637 München (DE); Orgler, Florian, 80335 München (DE)
(74) Vertreter: v. Bezold & Partner Patentanwälte - PartG mbB

(56) Entgegenhaltungen:
- EP-A1- 2 644 926
- DE-A1- 102004 053 026
- DE-A1- 102010 019 470
- DE-A1- 102012 006 094
- DE-A1- 102012 006 135
- DE-A1- 2 204 047

## Beschreibung

Die vorliegende Erfindung betrifft einen Bremsbelag und eine Bremsbelaghaltevorrichtung einer Scheibenbremse eines Kraftfahrzeugs.

Im Bereich der Radbremsen nimmt das Thema unerwünschter Geräuschentwicklung großen Raum ein. Neben reibungsinduzierten Schwingungen wie z. B. Quietschen treten aber auch andere Geräusche auf, die auf Fahrbahnunebenheiten oder Bremsbetätigungsvorgänge zurückgeführt werden können.

Nach dem Stand der Technik kommen im Nutzfahrzeugbereich beispielsweise Schwimmsattelbremsen zum Einsatz. Um dabei die hohen auftretenden Bremsmomente abzustützen, werden die Bremsbeläge in einem achsfesten Bremsträger in beide Rotationsrichtungen der Bremsscheibe durch sogenannte Belaghörner abgestützt. Der schwimmend gelagerte Bremssattel erzeugt dann lediglich die Zuspannkraft, mit der die Bremsbeläge an die Bremsscheibe gedrückt werden. Damit die Bremsbeläge leichtgängig im Belagschacht bewegt werden können, werden Bremsbeläge und Bremsbelagschacht in einer bestimmten Toleranzlage zueinander bearbeitet. Die Belaghörner des Bremsträgers sind dabei im Normalzustand parallel zueinander gefertigt. Dadurch können unterschiedlich große Spiele entstehen. Bei einer manuellen Montage des Bremsträgers (z. B. nach einem Bremsscheibenwechsel) ist es jedoch möglich, dass sich durch das Schraubenanzugsmoment die Belagschachtform des Bremsträgers derart V-förmig verformt, dass das Spiel an der Spitze der Belaghörner sich weiter vergrößert. Im Fahrzeugbetrieb liegt der Bremsbelag abhängig von der Einbaulage des Bremssattels schwerkraftbedingt entweder am bremsscheibeneinlaufenden Belaghorn (sog. "9-Uhr-Einbaulage"), am bremsscheibenauslaufenden Belaghorn (sog. "3-Uhr-Einbaulage) oder undefiniert (sog. "12-Uhr-Einbaulage") an.

Ein Bremsmoment kann jedoch erst dann abgestützt werden, wenn der Bremsbelag am bremsscheibenauslaufenden Belaghorn anliegt. Sollte der Bremsbelag nun schwerkraftbedingt am bremsscheibeneinlaufenden Horn anliegen, muss er erst das komplette Spiel, das sich durch die Fertigungstoleranzen und Bremsträgerverformung gebildet hat, überwinden. In dieser Zeit nimmt der Bremsbelag jedoch bedingt durch die Bremsscheibenrotation Geschwindigkeit auf, bevor er am auslaufseitigen Belaghorn anschlägt und Bremsmoment übertragen werden kann. Dies führt damit zu einem verzögerten Ansprechen der Bremse und einer ungewünschten Geräuschbildung. Beim Lösen der Bremse fällt der Bremsbelag dann wieder auf das einlaufseitige Belaghorn zurück, was wiederum in einem Anschlaggeräusch resultiert.

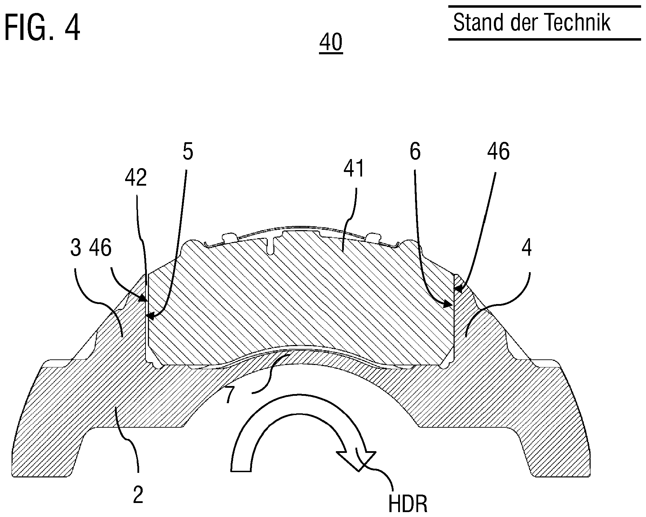

Figur 4 zeigt eine Seitendraufsicht im Schnitt auf einen in einem Bremsträger 2 gehaltenen Bremsbelag gemäß dem Stand der Technik, von dem in der Schnittansicht der Figur 4 nur die Bremsbelagträgerplatte (nachfolgend auch kurz als Belagträgerplatte bezeichnet) 41 sichtbar ist. Bei dieser bekannten Bremsbelaghaltevorrichtung 40 ist der Bremsträger 2 mit jeweiligen einlaufseitigen und auslaufseitigen die Belagträgerplatte 41 stützenden Belaghörnern 3, 4 ausgebildet. Die Belaghörner 3 und 4 und das diese verbindende Brückenteil 7 bilden den Belagschacht, in dem der Bremsbelag mit Spiel (siehe Spalt 42) geführt ist.

Zum Ein- oder Ausbau der Belagträgerplatte 41 wird diese senkrecht in die Lücke zwischen den beiden Belaghörnern 3, 4 eingeschoben, wobei die Belaghörner 3, 4 sich bis zum radial außen liegenden Rand oder nahezu bis zum Rand der Bremsbelagträgerplatte 41 erstrecken. Dabei sind sowohl die Innenflächen 5, 6 der Belaghörner 3, 4 als auch die diesen benachbarten Stützflächen 46 der Belagträgerplatte 41 als ebene Flächen ausgebildet. Als einlaufseitiges Trägerhorn 3 wird dabei das in einer Hauptdrehrichtung HDR der Bremsscheibe, also der Drehrichtung der Bremsscheibe während einer Vorwärtsfahrt des Kraftfahrzeugs, hintere Trägerhorn bezeichnet. Ferner erkennbar ist ein Spalt 42 zwischen der einlaufseitigen Stützfläche 46 der Belagträgerplatte 41 und dem einlaufseitigen Belaghorn 3 erkennbar, aufgrund dessen das Spiel und die vorstehend beschriebenen Anschlaggeräusche entstehen. Um derartige Effekte zu vermeiden, sind nach dem Stand der Technik verschiedene Lösungen bekannt.

Aus dem Dokument US 3,885,651 A ist bekannt, eine separate Belagschachtfeder zwischen Bremsbelag und Träger anzuordnen. Ein Nachteil hieran ist, dass die Belagschachtfeder bei einem Bremsvorgang in rückwärtiger Richtung derart komprimiert wird, dass eine plastische Verformung nicht ausgeschlossen werden kann. In diesem Fall wäre eine anschließende ordnungsgemäße Funktion der Belagschachtfeder nicht mehr gewährleistet.

In der Offenlegungsschrift DE 10 2012 002 734 A1 wird dagegen vorgeschlagen, ein Federelement am Boden des Belagschachts anzuordnen, welches den Bremsbelag radial gegen runde Führungsflächen drückt. Die in der DE 10 2012 002 734 A1 vorgeschlagene Konstruktion lässt sich nicht mit Standardbelagschächten umsetzen und verhindert ein normales Einsetzen der Bremsbeläge in radialer Richtung. Um die Beläge zu tauschen, müssen diese nach einem vollständigen Zurückstellen der Druckstücke erst in Richtung Bremsscheibe bewegt werden, bis sie den Belagschacht in dieser Richtung vollständig verlassen haben. Erst dann ist ein Entfernen in radialer Richtung möglich. Dies bedeutet jedoch einen höheren Arbeitsaufwand, gerade wenn die Bremsbeläge nur kontrolliert, aber nicht getauscht werden sollen.

Die Dokumente DE10 2010 019470 A1 und DE10 2012 006135 A1 offenbaren ein elastisches Element zwischen einem Bremsträgerhorn und einem Bremsbelag, wobei das elastische Element in einer Ausnehmung des Bremsbelages einliegt.

Es ist somit eine Aufgabe der Erfindung, eine verbesserte Bremsbelaghaltevorrichtung und einen verbesserten Bremsbelag einer Scheibenbremse bereitzustellen, mit denen Nachteile herkömmlicher Vorrichtungen vermieden werden können. Die Aufgabe der Erfindung ist es insbesondere, einen Bremsbelag bereitzustellen, der mit üblichen Belagschachtbauarten, wie in Figur 4 dargestellt, funktioniert und/oder auch nur nach Bedarf in vorhandene Schwimmsattelbremsen eingebracht werden kann. Die Konstruktion soll dabei verhindern, dass der Belag in zumindest einer Hauptfahrrichtung verzögert anschlägt und wenigstens in der anderen Fahrtrichtung nicht zu einer Beschädigung der Konstruktion führt und somit ein sicheres Bremsen erlaubt.

Diese Aufgaben werden durch Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird ein Bremsbelag zur Aufnahme in einen Belagschacht einer Scheibenbremse sowie eine Bremsbelaghaltevorrichtung einer Scheibenbremse eines Kraftfahrzeugs bereitgestellt. Das Kraftfahrzeug kann ein Nutzfahrzeug sein. Die Scheibenbremse kann eine Schwimmsattelbremse sein.

Die Bremsbelaghaltevorrichtung umfasst einen Bremsträger, vorzugsweise einen fahrzeugseitig ortsfesten Bremsträger, aufweisend einen Belagschacht zur Aufnahme eines Bremsbelags. Der Belagschacht ist in Bezug auf eine Hauptdrehrichtung der Bremsscheibe bremsscheibeneinlaufseitig und bremsscheibenauslaufseitig jeweils durch ein Belaghorn des Bremsträgers begrenzt.

Die Bremsbelaghaltevorrichtung umfasst ferner einen in dem Belagschacht geführten Bremsbelag, aufweisend einen Belaghalter und einen daran befestigten Reibbelag. Die Bremsbelaghaltevorrichtung umfasst ferner ein Federelement, d. h. ein federndes Element, das sich an einem Belaghorn und einer diesem Belaghorn benachbarten Stützfläche des Belaghalters abstützt, d. h. anliegt.

Die Belaghörner und vorzugsweise das diese verbindende Brückenteil des Bremsträgers bilden den Belagschacht, in dem der Bremsbelag geführt ist. Das Belaghorn wird auch als Trägerhorn bezeichnet. Gegebenenfalls wird im Rahmen der vorliegenden Erfindung statt des Begriffs "Belaghorn" daher auch der Begriff "Trägerhorn" verwendet. Beide Begriffe sind im Rahmen der vorliegenden Erfindung als gleichbedeutend anzusehen. Die Belaghörner sind vorzugsweise jeweils als Träger mit einer dem Bremsbelag zugewandten geradlinigen Stützfläche ausgebildet, d. h., diese Stützflächen der einlaufseitigen und auslaufseitigen Belaghorns sind parallel.

Der Belaghalter ist üblicherweise als Trägerplatte ausgeführt und wird auch als Belagträgerplatte oder Belagrückenplatte bezeichnet und kann ferner sog. Underlayer-Zwischenschichten aufweisen. Die Belagoberseite des Reibbelags dient als Reibfläche zum tribologischen Zusammenwirken mit einem Reibelement, z. B. einer Bremsscheibe.

Als einlaufseitiges Trägerhorn wird dabei das in einer Hauptdrehrichtung der Bremsscheibe, also der Drehrichtung der Bremsscheibe während einer Vorwärtsfahrt des Kraftfahrzeugs, hintere Trägerhorn bezeichnet. Entsprechend wird als auslaufseitiges Trägerhorn das in einer Hauptdrehrichtung der Bremsscheibe, also der Drehrichtung der Bremsscheibe während einer Vorwärtsfahrt des Kraftfahrzeugs, vordere Trägerhorn bezeichnet.

Eine erfindungsgemäße Bremsbelagvorrichtung zeichnet sich ferner dadurch aus, dass das Federelement in einer Ausnehmung des Belaghalters eingelegt ist. Das Federelement kann so in die Ausnehmung eingelegt sein, dass es im nicht belasteten Zustand über den Rand der Ausnehmung und somit über die dem Belaghorn benachbarte Stützfläche des Bremsbelags übersteht. Die Ausnehmung kann als Tasche oder als Nut ausgeführt sein. Die Nut kann eine Längsnut sein. Das Federelement kann so in die Nut eingelegt ist, dass es sich in der Nut bei Belastung längs ausdehnen kann.

Das Federelement bietet den Vorteil, dass dadurch der Belaghalter an das entsprechende Belaghorn des Bremsträgers gedrückt wird, wodurch das Spiel zwischen Belaghalter und Belagschacht eliminiert wird. Hierdurch wird verhindert, dass der Bremsbelag in zumindest einer Fahrrichtung verzögert anschlägt und wenigstens in der anderen Fahrtrichtung nicht zu einer Beschädigung der Konstruktion führt und somit ein sicheres Bremsen erlaubt. Die Anordnung des Federelements in der Ausnehmung bietet den besonderen Vorzug, dass das Federelement nicht zu stark zusammengedrückt werden kann und somit stets im elastischen Bereich arbeitet.

Erfindungsgemäß stützt sich das Federelement am einlaufseitigen Belaghorn ab. Mit anderen Worten liegt das Federelement am einlaufseitigen Belaghorn und an der dem einlaufseitigen Belaghorn benachbarten Stützfläche des Belaghorns an. Diese Anordnung stellt sicher, da der Bremsbelag bei einem Bremsvorgang in der Hauptfahrrichtung, d. h. während einer Vorwärtsfahrt des Kraftfahrzeugs, nicht verzögert anschlägt, dass der Bremsbelag durch die Federkraft des Federelements bereits am bremsscheibenauslaufenden Belaghorn anliegt und sich dort abstützt.

Gemäß einem weiteren Aspekt können die Tiefe der Ausnehmung und das Federelement so ausgeführt sein, dass das Federelement im belasteten Zustand vollständig in die Ausnehmung eintauchen kann. Hierzu muss die Tiefe der Ausnehmung so groß sein und/oder das Federelement so ausgeführt sein, dass das Federelement so weit zusammengedrückt werden kann, dass es nicht mehr aus der Ausnehmung herausragt. Dadurch können auch Spiele ab null Millimeter zuverlässig eliminiert werden.

Eine erfindungsgemäße Realisierung sieht vor, dass sich das Federelement an dem Belaghalter an mindestens zwei Stellen, z. B. zwei Punkten, abstützt und sich am Belaghorn an nur einer Stelle, z. B. an nur einem Punkt, abstützt. Dadurch wird eine Überbestimmung vermieden und ein Klemmen des Bremsbelags im Belagschacht vermieden.

Um die Reibung in Zuspannrichtung weiterhin zu reduzieren, kann das federnde Element in vorteilhafter Weise aus Rundmaterial oder aus einem Material mit einem ovalen Querschnitt gefertigt sein. Hierbei kann der Anlagepunkt zum Belagschacht sich in einer Rundung des Federelements befinden, so dass nur ein Punktkontakt zustande kommt. Das Federelement kann beispielsweise aus einem Rundstahl gefertigt sein. Ferner kann das Federelement als eine Drahtfeder ausgeführt sein, was eine kostengünstige und platzsparende Realisierung ermöglicht.

Eine weitere vorteilhafte Möglichkeit der erfindungsgemäßen Realisierung sieht vor, dass das Federelement an einem Punkt derart gesichert ist, z. B. gehaltert oder fixiert ist, dass es bei Einschub des Bremsbelags in den Belagschacht nicht seine Lage ändert. Beispielsweise kann die Ausnehmung, in die das Federelement eingelegt ist, an einer Stelle eine Vertiefung aufweisen, in der ein Ende des Federelements eingesteckt ist und dort z. B. formschlüssig gehaltert ist. Diese Vertiefung kann senkrecht oder schräg zum Boden der Vertiefung verlaufen bzw. senkrecht oder schräg zur Oberfläche des Reibhorns. Das in die Vertiefung gesteckte Ende des Federelements weist eine entsprechende Krümmung und/oder einen Knick auf, um in die Vertiefung gesteckt werden zu können.

Gemäß einem weiteren Aspekt kann sich das Federelement in mindestens eine Richtung frei bewegen, um den Federweg verspannungsfrei gewährleisten zu können.

Um die Festigkeit der Belaghalters zu gewährleisten, kann eine Breite der Ausnehmung höchstens 50 % der Dicke des Belaghalters aufweisen.

Vorstehend wurde bereits erwähnt, dass es vorteilhaft ist, wenn das Federelement am Belaghorn an nur einer Stelle anliegt und sich damit an nur einer Stelle abstützt. Bei einer vorteilhaften Variante dieser Ausgestaltungsform ist der Anlagepunkt des Federelements am Belaghorn, vorzugsweise am einlaufseitigen Belaghorn, exzentrisch zur vereinfachten Kraftabstützung auf der Auslaufseite, d. h. exzentrisch zur gemittelten Kraftabstützung des Bremsbelags an dem auslaufseitigen Belaghorn. Unter dieser gemittelten Kraftabstützung wird die resultierende Reibkraft des Bremsbelags an dem auslaufseitigen Belaghorn verstanden, die typischerweise auf mittlerer Höhe des Belaghorns und des Bremsbelags angreift.

Dadurch ergibt sich am Bremsbelag ein definiertes Drehmoment um eine zur Drehachse der Bremsscheibe parallele Z-Achse, das einem auf den Bremsbelag bei Bremsen wirkenden Drehmoment entgegenwirkt, welches versucht, den Bremsbelag aus dem Belagschacht herauszudrehen.

Erfindungsgemäß befindet sich der der Anlagepunkt des Federelements am Belaghorn radial an einem größeren Radius als die resultierende Kraftabstützung des Bremsbelags an dem auslaufseitigen Belaghorn, da hier die Spiele montagebedingt größer sein können. Mit anderen Worten liegt der der Anlagepunkt des Federelements am Belaghorn in der oberen Hälfte, vorzugsweise im oberen Drittel, des Belaghorns. Die obere Hälfte bzw. das obere Drittel ist dasjenige, das näher an dem äußeren Rand der Bremsscheibe liegt.

Gemäß dieser Variante ergibt sich am Bremsbelag ein definiertes Drehmoment um eine zur Drehachse der Bremsscheibe parallele Z-Achse, das einlaufseitig am Trägerhorn eine Abstützkraft erzeugt und den Bremsbelag somit im Belagschacht stabilisiert.

Gemäß einem weiteren Aspekt der Erfindung kann die Bremsbelaghaltevorrichtung ferner in an sich bekannter Weise einen eine Bremsscheibe übergreifenden Bremssattel, der schwimmend am Bremsträger gelagert ist, aufweisen.

Ferner beansprucht die Erfindung einen Bremsbelag nach Anspruch 9. Gemäß einem weiteren Gesichtspunkt der Erfindung wird somit ein Bremsbelag bereitgestellt, insbesondere ein Bremsbelag zur Aufnahme in einen Belagschacht eines fahrzeugseitig ortsfesten Bremsträgers einer Bremsbelaghaltevorrichtung einer Scheibenbremse, wobei der Belagschacht in Bezug auf eine Hauptdrehrichtung der Bremsscheibe bremsscheibeneinlaufseitig und bremsscheibenauslaufseitig jeweils durch ein Belaghorn des Bremsträgers begrenzt wird.

Wie vorstehend bereits erwähnt, kann die Ausnehmung eine Nut sein.

Zur Vermeidung von weiteren Wiederholungen sollen alle in Zusammenhang mit der Bremsbelagvorrichtung offenbarten Merkmale des Bremsbelags auch als für einen Vorrichtungsanspruch auf den Bremsbelag per se offenbart gelten und beanspruchbar sein.

Die Erfindung betrifft ferner ein Kraftfahrzeug, insbesondere ein Nutzfahrzeug, mit einer Bremsbelaghaltevorrichtung, wie in diesem Dokument offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitendraufsicht im Schnitt einer Bremsbelaghaltevorrichtung gemäß einer Ausführungsform der Erfindung;
- Figur 2: eine Seitendraufsicht im Schnitt eines Bremsbelaghalters mit Federelement gemäß einem Ausführungsbeispiel der Erfindung; und
- Figur 3: eine perspektivische Ansicht des Bremsbelaghalters aus Figur 2; und
- Figur 4: eine Seitendraufsicht im Schnitt einer aus dem Stand der Technik bekannten Bremsbelaghaltevorrichtung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, der Belagträgerplatte und des Bremsträgers. Diese Begriffe sind nicht einschränkend zu verstehen, d. h., durch verschiedene Arbeitsstellungen oder die spiegelsymmetrische Auslegung oder dergleichen können sich diese Bezüge ändern.

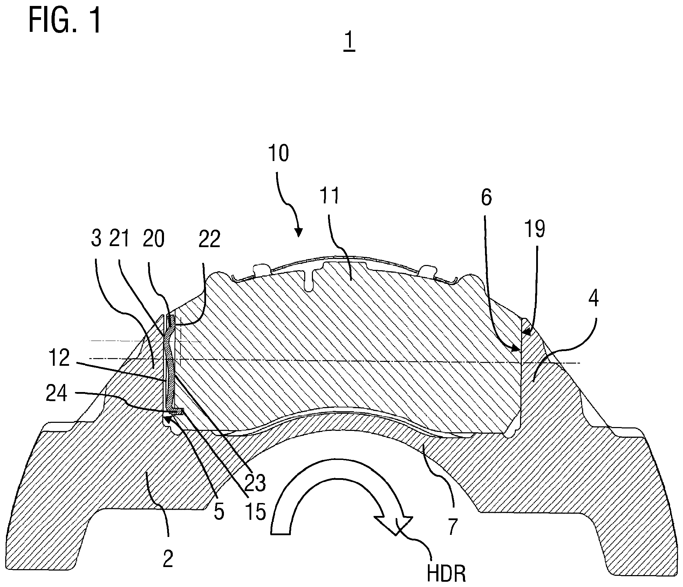

Figur 1 zeigt eine Seitendraufsicht im Schnitt einer Bremsbelaghaltevorrichtung gemäß einer Ausführungsform der Erfindung. In der Figur 1 ist dabei ein an sich bekannter Bremsträger 2 einer Scheibenbremse, beispielsweise einer Schwimmsattelbremse, gezeigt. Der Bremsträger 2 kann dabei als separates Bauteil, wie hier gezeigt, oder als integraler Bestandteil eines Bremssattels ausgebildet sein. Zur Befestigung des Bremsträgers 2 an einer Fahrzeugachse ist dieser üblicherweise mit Bohrungen versehen, in die Schrauben oder Bolzen einführbar sind und den Bremsträger an der Fahrzeugachse halten.

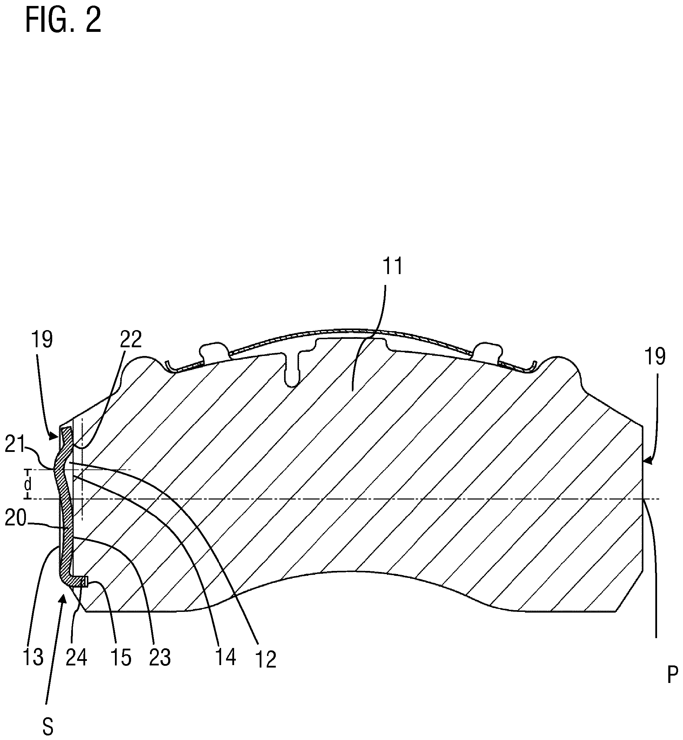

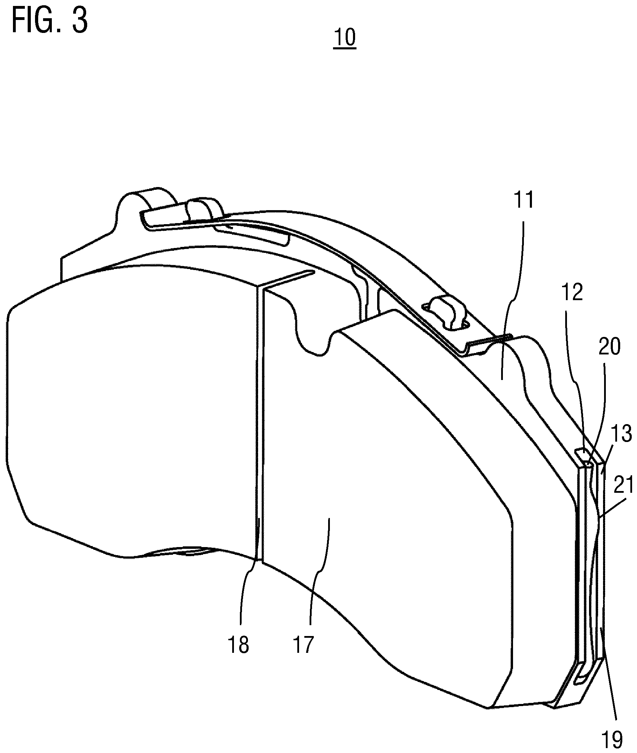

Mit dem Bezugszeichen 11 ist dabei eine an sich bekannte Belagträgerplatte (auch als Belagrückenplatte bezeichnet) eines Bremsbelags 10 bezeichnet, von dem in Figur 1 nur die Belagträgerplatte 11 sichtbar ist und auf dessen in Figur 2 nicht zu sehender Rückseite ein Reibbelag 17 (zu erkennen in Figur 3) festgelegt ist. Zur Aufnahme von im Bremsbetrieb an der Reibfläche entstehenden Abriebpartikeln kann in den Reibbelag 17 eine dünne Nut 18 eingebracht sein. Der Bremsträger 2 ist mit jeweiligen einlaufseitigen und auslaufseitigen die Belagträgerplatte 11 stützenden Belaghörnern 3, 4 ausgebildet. Die Belaghörner 3 und 4 und das diese verbindende Brückenteil 7 bilden den Belagschacht, in dem der Bremsbelag 10 geführt ist.

Das Trägerhorn 3 stellt vorliegend das einlaufseitige Belaghorn 3 da, da es in der Hauptdrehrichtung HDR der Bremsscheibe, also der Drehrichtung der Bremsscheibe während einer Vorwärtsfahrt des Kraftfahrzeugs, das hintere Belaghorn ist. Das Belaghorn 4 ist entsprechend das auslaufseitige Belaghorn. Die Belaghörner 3, 4 sind jeweils als Träger mit einer dem Bremsbelag zugewandten geradlinigen Stützfläche 5, 6 ausgebildet, d. h., diese Stützflächen 5, 6 des einlaufseitigen und auslaufseitigen Belaghorns sind parallel. Zu diesen Stützflächen 5, 6 benachbart sind die Belaghornabstützflächen 19 der Belagträgerplatte, d. h. die seitlichen Außenflächen der Belagträgerplatte 11, mit denen sich die Belagträgerplatte 11 an den Stützflächen 5, 6 der Belaghörner 3, 4 abstützen kann, wenn die Belagträgerplatte in den Belagschacht eingebracht wurde.

In die Belagrückenplatte 11 ist in eine der Belaghornabstützflächen 19 eine Ausnehmung in Form einer Nut 12 eingebracht, in die ein federndes Element 20, hier eine Drahtfeder aus einem Ringstahl, eingebracht ist. Die Ausnehmung ist in die einlaufseitige Belaghornabstützfläche eingebracht, wodurch die Belagrückenplatte 11 bremsscheibenauslaufseitig an das einlaufseitige Belaghorn 3 des Bremsträgers 2 gedrückt wird. Das Federelement 20 kann dabei voll in die Nut 12 eintauchen und damit Spiele ab null Millimeter eliminieren. Im nicht komprimierten Zustand des Federelements ragt das Federelement aus der Nut 12 heraus und überragt damit die Nutwände 13.

Das federnde Element (Federelement) 20 stützt sich dabei in der Belagrückenplatte 11 an zwei Punkten 22 und 23 ab, d. h., das Federelement 20 liegt an den zwei Punkten 22 und 23 am Nutboden 14 auf. Dagegen steht das Federelement 20 nur an einem Punkt 21 mit dem Belagschacht bzw. dem einlaufseitigen Belaghorn 3 in Berührung. Dadurch werden eine Überbestimmung und ein Klemmen des Bremsbelags 10 im Belagschacht vermieden. Hierbei befindet sich der Anlagepunkt 21 am Belagschacht in einer Rundung des Federelements 20, um eine Kontaktreibung zu reduzieren.

Darüber hinaus befindet sich der Anlagepunkt 21 vorteilhafterweise exzentrisch zur vereinfachten Kraftabstützung auf der Auslaufseite und in dem gezeigten Ausführungsbeispiel ferner radial an einem größeren Radius, da hier die Spiele montagebedingt größer sein können.

Dies ist in Figur 2 besser erkennbar, die eine vergrößerte Seitendraufsicht im Schnitt des Bremsbelaghalters 10 mit Federelement 20 aus Figur 1 zeigt.

Der resultierende Kraftvektor der gemittelten Kraftabstützung auf der Auslaufseite greift am Punkt P an, durch den die punktgestrichelte horizontale Linie verläuft. Exzentrisch hierzu mit dem Abstand d von dem resultierenden Kraftvektor der gemittelten Kraftabstützung auf der Auslaufseite liegt der Anlagepunkt 21 am einlaufseitigen Belaghorn 3. Der Punkt 21 liegt in Bezug auf den resultierenden Kraftvektor der gemittelten Kraftabstützung auf der Auslaufseite oberhalb dieses Kraftvektors, d. h. radial an einem größeren Radius und damit näher an der Außenumfangsseite der Bremsscheibe (nicht gezeigt).

Das Federelement 20 ist dabei an mindestens einem Punkt derart gesichert, dass es bei Einschub des Bremsbelags 10 in den Belagschacht nicht seine Lage ändert, und kann sich in mindestens einer Richtung frei bewegen, um den Federweg verspannungsfrei zu gewährleisten. Hierzu ist vorliegend eine Vertiefung 15 in einem unteren Endbereich S der Nut 12 eingebracht, in die ein hakenförmig gekrümmtes Ende 24 des Federelements zur Ausbildung einer formschlüssigen Halterung eingesteckt ist.

### Bezugszeichenliste

- 1: Bremsbelaghaltevorrichtung
- 2: Bremsträger
- 3: Einlaufseitiges Belaghorn
- 4: Auslaufseitiges Belaghorn
- 5: Stützfläche des einlaufseitigen Belaghorns
- 6: Stützfläche des auslaufseitigen Belaghorns
- 7: Brückenteil
- 10: Bremsbelag
- 11: Belaghalter, z. B. Belagträgerplatte
- 12: Ausnehmung, z. B. Nut
- 13: Nutwand
- 14: Nutboden
- 15: Vertiefung
- 17: Reibbelag
- 18: Nut
- 19: Stützfläche des Belaghalters (Belaghornabstützfläche)
- 20: Federelement, z. B. Drahtfeder
- 21: Abstützstelle am Belaghorn
- 22, 23: Abstützstelle am Belaghalter
- 24: Gekrümmtes Ende des Federelements
- 40: Bremsbelaghaltevorrichtung
- 41: Belaghalter, z. B. Belagträgerplatte
- 42: Spiel
- 46: Abstützfläche
- HDR: Hauptdrehrichtung
- P: Auslaufseitige gemittelte Kraftabstützstelle
- S: Sicherungsstelle

## Patentansprüche

1. Bremsbelaghaltevorrichtung (1) einer Scheibenbremse für eine Kraftfahrzeug, insbesondere eines Nutzfahrzeugs, aufweisend
- einen Bremsträger (2), aufweisend einen Belagschacht zur Aufnahme eines Bremsbelags, wobei der Belagschacht in Bezug auf eine Hauptdrehrichtung (HDR) der Bremsscheibe bremsscheibeneinlaufseitig und bremsscheibenauslaufseitig jeweils durch ein Belaghorn (3, 4) des Bremsträgers (2) begrenzt wird;
- einen in dem Belagschacht geführten Bremsbelag (10), aufweisend einen Belaghalter (11) und einen daran befestigten Reibbelag (17);
- ein Federelement (20), das in einer Ausnehmung (12) des Belaghalters (11) eingelegt ist und das sich an einem Belaghorn (3) und einer diesem Belaghorn (3) benachbarten Stützfläche (19) des Belaghalters (11) abstützt,
**dadurch gekennzeichnet, dass** sich das Federelement (20) an dem Belaghalter (11) an mindestens zwei Stellen (22, 23) abstützt und sich am Belaghorn (3) an nur einer Stelle (21) abstützt, wobei die Anlagestelle (21) des Federelements am einlaufseitigen Belaghorn (3) in der oberen Hälfte, vorzugsweise im oberen Drittel, des Belaghorns (3) liegt.

2. Bremsbelaghaltevorrichtung (1) nach Anspruch 1, **dadurch gekennzeichnet, dass** eine Tiefe der Ausnehmung (12) und das Federelement (20) so ausgeführt sind, dass das Federelement (20) im belasteten Zustand vollständig in die Ausnehmung (12) eintauchen kann.

3. Bremsbelaghaltevorrichtung (1) nach einem der vorhergehenden Ansprüche, **dadurch gekennzeichnet, dass** die Ausnehmung eine Nut (12), insbesondere eine Längsnut, ist.

4. Bremsbelaghaltevorrichtung (1) nach einem der vorhergehenden Ansprüche, **dadurch gekennzeichnet, dass** das Federelement (20) aus einem Rundmaterial oder aus einem Material mit einem ovalem Querschnitt gefertigt ist.

5. Bremsbelaghaltevorrichtung (1) nach einem der vorhergehenden Ansprüche, **dadurch gekennzeichnet,**
a) **dass** das Federelement (20) an einer Stelle (S) derart gesichert ist, dass es bei Einschub des Bremsbelags (10) in den Belagschacht nicht seine Lage ändert; und/oder
b) **dass** die Ausnehmung (12) an einer Stelle (S) eine Vertiefung aufweist, in die ein Ende (24) des Federelements (20) eingesteckt ist und/oder formschlüssig gesichert ist.

6. Bremsbelaghaltevorrichtung (1) nach einem der vorhergehenden Ansprüche, **dadurch gekennzeichnet, dass** eine Breite der Ausnehmung (12) höchstens 50 % der Dicke des Belaghalters (11) aufweist.

7. Bremsbelaghaltevorrichtung (1) nach einem der vorhergehenden Ansprüche, **dadurch gekennzeichnet, dass** die Anlagestelle (21) des Federelements am einlaufseitigen Belaghorn (3) exzentrisch zur gemittelten Kraftabstützung (Reibkraft) des Bremsbelags an dem auslaufseitigen Belaghorn (4) ist;

8. Bremsbelaghaltevorrichtung (1) nach einem der vorhergehenden Ansprüche, **gekennzeichnet durch** einen eine Bremsscheibe übergreifenden Bremssattel, der schwimmend am Bremsträger (2) gelagert ist.

9. Bremsbelag (10) zur Aufnahme in einen Belagschacht eines fahrzeugseitig ortsfesten Bremsträgers (2) einer Bremsbelaghaltevorrichtung (1) einer Scheibenbremse, wobei insbesondere der Belagschacht in Bezug auf eine Hauptdrehrichtung (HDR) der Bremsscheibe bremsscheibeneinlaufseitig und bremsscheibenauslaufseitig jeweils durch ein Belaghorn (3, 4) des Bremsträgers (2) begrenzt wird; aufweisend
- einen Belaghalter (11) und
- einen daran befestigten Reibbelag (17), wobei eine Belaghornabstützfläche (19) des Belaghalters (11) eine Ausnehmung (12) zur Aufnahme eines Federelements aufweist,
ferner umfassend ein in die Ausnehmung eingelegtes Federelement (20), **dadurch gekennzeichnet, dass** eine Breite der Ausnehmung (12) höchstens 50 % der Dicke des Belaghalters (11) aufweist, und
die Ausnehmung (12) an einer Stelle (S) eine Vertiefung aufweist, in die ein Ende (24) des Federelements (20) eingesteckt ist, wobei das in die Vertiefung gesteckte Ende (24) des Federelements (20) einen Knick aufweist.

10. Bremsbelag nach Anspruch 9, wobei die Ausnehmung (12) eine Nut ist.

11. Bremsbelag nach Anspruch 9 oder 10, wobei eine Tiefe der Ausnehmung (12) und das Federelement (20) so ausgeführt sind, dass das Federelement (20) im belasteten Zustand vollständig in die Ausnehmung (12) eintauchen kann, und/oder wobei das Federelement (20) aus einem Rundmaterial oder aus einem Material mit einem ovalen Querschnitt gefertigt ist.

12. Kraftfahrzeug, insbesondere Nutzfahrzeugs, mit einer Bremsbelaghaltevorrichtung nach einem der vorhergehenden Ansprüche 1 bis 8.

## Claims

1. Brake lining holding apparatus (1) for a disc brake for a motor vehicle, in particular a utility vehicle, having
- a brake carrier (2), having a lining slot for receiving a brake lining, the lining slot being delimited on the brake disc inlet side and on the brake disc outlet side, in relation to a main rotational direction (HDR) of the brake disc, in each case by way of a lining horn (3, 4) of the brake carrier (2);
- a brake lining (10) which is guided in the lining slot, having a lining holder (11) and a friction lining (17) which is fastened to it;
- a spring element (20) which is inserted in a recess (12) of the lining holder (11) and is supported on a lining horn (3) and a supporting face (19) of the lining holder (11), which supporting face (19) is adjacent with respect to the said lining horn (3),
**characterized in that** the spring element (20) is supported on the lining holder (11) at at least two points (22, 23), and is supported on the lining horn (3) at only one point (21), the contact point (21) of the spring element with the inlet-side lining horn (3) lying in the upper half, preferably in the upper third, of the lining horn (3).

2. Brake lining holding apparatus (1) according to Claim 1, **characterized in that** a depth of the recess (12) and the spring element (20) are configured in such a way that, in the loaded state, the spring element (20) can dip completely into the recess (12).

3. Brake lining holding apparatus (1) according to either of the preceding claims, **characterized in that** the recess is a groove (12), in particular a longitudinal groove.

4. Brake lining holding apparatus (1) according to one of the preceding claims, **characterized in that** the spring element (20) is manufactured from a round material or from a material with an oval cross section.

5. Brake lining holding apparatus (1) according to one of the preceding claims, **characterized**
a) **in that** the spring element (20) is secured at one point (S) in such a way that the brake lining (10) does not change its position in the case of it being pushed into the lining slot; and/or
b) **in that**, at one point (S), the recess (12) has a depression, into which an end (24) of the spring element (20) is plugged and/or secured in a positively-locking manner.

6. Brake lining holding apparatus (1) according to one of the preceding claims, **characterized in that** a width of the recess (12) is at most 50% of the thickness of the lining holder (11).

7. Brake lining holding apparatus (1) according to one of the preceding claims, **characterized in that** the contact point (21) of the spring element with the inlet-side lining horn (3) is eccentric with respect to the averaged force support (frictional force) of the brake lining on the outlet-side lining horn (4).

8. Brake lining holding apparatus (1) according to one of the preceding claims, **characterized by** a brake calliper which engages over a brake disc and is mounted in a floating manner on the brake carrier (2).

9. Brake lining (10) for receiving in a lining slot of a brake carrier (2), which is stationary on the vehicle side, of a brake lining holding apparatus (1) of a disc brake, the lining slot being delimited, in particular, on the brake disc inlet side and on the brake disc outlet side, in relation to a main rotational direction (HDR) of the brake disc, in each case by way of a lining horn (3, 4) of the brake carrier (2); having
- a lining holder (11), and
- a friction lining (17) which is fastened to it, a lining horn supporting face (19) of the lining holder (11) having a recess (12) for receiving a spring element, comprising, furthermore, a spring element (20) which is inserted into the recess, **characterized in that**
a width of the recess (12) is at most 50% of the thickness of the lining holder (11), and that the recess (12) has a depression at a location (S), into which one end (24) of the spring element (20) is plugged in, wherein the inserted end (24) of the spring element (20) features a bend.

10. Brake lining according to Claim 9, the recess (12) being a groove.

11. Brake lining according to Claim 9 or 10, wherein a depth of the recess (12) and the spring element (20) are configured in such a way that, in the loaded state, the spring element (20) can dip completely into the recess (12); and/or wherein the spring element (20) is manufactured from a round material or from a material with an oval cross section.

12. Motor vehicle, in particular utility vehicle, with a brake lining holding apparatus according to one of the preceding Claims 1 to 8.

## Revendications

1. Dispositif de retenue de garniture de frein (1) d'un frein à disque pour un véhicule automobile, notamment un véhicule utilitaire, comprenant :
- un support de frein (2), comprenant un puits de garniture pour la réception d'une garniture de frein, le puits de garniture étant limité par rapport à une direction de rotation principale (HDR) du disque de frein côté entrée du disque de frein et côté sortie du disque de frein à chaque fois par un rebord de garniture (3, 4) du support de frein (2) ;
- une garniture de frein (10) guidée dans le puits de garniture, comprenant un porte-garniture (11) et une garniture de friction (17) fixée à celui-ci ;
- un élément ressort (20), qui est placé dans un évidement (12) du porte-garniture (11) et qui s'appuie sur un rebord de garniture (3) et une surface d'appui (19), voisine de ce rebord de garniture (3), du porte-garniture (11),
**caractérisé en ce que** l'élément ressort (20) s'appuie à au moins deux emplacements (22, 23) sur le porte-garniture (11) et s'appuie à uniquement un emplacement (21) sur le rebord de garniture (3), l'emplacement d'application (21) de l'élément ressort sur le rebord de garniture côté entrée (3) étant situé dans la moitié supérieure, de préférence dans le tiers supérieur, du rebord de garniture (3).

2. Dispositif de retenue de garniture de frein (1) selon la revendication 1, **caractérisé en ce qu'**une profondeur de l'évidement (12) et l'élément ressort (20) sont réalisés de telle sorte que l'élément ressort (20) puisse s'enfoncer entièrement dans l'évidement (12) à l'état chargé.

3. Dispositif de retenue de garniture de frein (1) selon l'une quelconque des revendications précédentes, **caractérisé en ce que** l'évidement est une rainure (12), notamment une rainure longitudinale.

4. Dispositif de retenue de garniture de frein (1) selon l'une quelconque des revendications précédentes, **caractérisé en ce que** l'élément ressort (20) est fabriqué en un matériau rond ou en un matériau ayant une section transversale ovale.

5. Dispositif de retenue de garniture de frein (1) selon l'une quelconque des revendications précédentes,
**caractérisé en ce que**
a) l'élément ressort (20) est sécurisé à un emplacement (S) de telle sorte qu'il ne modifie pas sa longueur lors de l'enfilage de la garniture de frein (10) dans le puits de garniture ; et/ou
b) l'évidement (12) présente à un emplacement (S) un creux, dans lequel une extrémité (24) de l'élément ressort (20) est insérée et/ou est sécurisée par accouplement de forme.

6. Dispositif de retenue de garniture de frein (1) selon l'une quelconque des revendications précédentes, **caractérisé en ce qu'**une largeur de l'évidement (12) comprend au plus 50 % de l'épaisseur du porte-garniture (11) .

7. Dispositif de retenue de garniture de frein (1) selon l'une quelconque des revendications précédentes, **caractérisé en ce que** l'emplacement d'application (21) de l'élément ressort sur le rebord de garniture côté entrée (3) est excentrique par rapport à l'appui de force moyenné (force de friction) de la garniture de frein sur le rebord de garniture côté sortie (4).

8. Dispositif de retenue de garniture de frein (1) selon l'une quelconque des revendications précédentes, **caractérisé par** un étrier de frein recouvrant un disque de frein, qui est monté en montage flottant sur le support de frein (2).

9. Garniture de frein (10) destinée à être reçue dans un puits de garniture d'un support de frein (2) fixe côté véhicule d'un dispositif de retenue de garniture de frein (1) d'un frein à disque, le puits de garniture étant notamment limité par rapport à une direction de rotation principale (HDR) du disque de frein côté entrée du disque de frein et côté sortie du disque de frein à chaque fois par un rebord de garniture (3, 4) du support de frein (2) ; comprenant :
- un porte-garniture (11) et
- une garniture de friction (17) fixée à celui-ci, une surface d'appui sur le rebord de garniture (19) du porte-garniture (11) présentant un évidement (12) pour la réception d'un élément ressort,
comprenant en outre un élément ressort (20) placé dans l'évidement, **caractérisée en ce qu'**une largeur de l'évidement (12) comprend au plus 50 % de l'épaisseur du porte-garniture (11), et l'évidement (12) présente à un emplacement (S) un creux, dans lequel une extrémité (24) de l'élément ressort (20) est insérée, et l'extrémité (24) de l'élément ressort (20) insérée dans le creux présente une courbure.

10. Garniture de frein selon la revendication 9, dans laquelle l'évidement (12) est une rainure.

11. Garniture de frein selon la revendication 9 ou 10, une profondeur de l'évidement (12) et l'élément ressort (20) sont réalisés de telle sorte que l'élément ressort (20) puisse s'enfoncer entièrement dans l'évidement (12) à l'état chargé ; et/ou l'élément ressort (20) est fabriqué en un matériau rond ou en un matériau ayant une section transversale ovale.

12. Véhicule automobile, notamment véhicule utilitaire, muni d'un dispositif de retenue de garniture de frein selon l'une quelconque des revendications 1 à 8 précédentes.
